# EUROPÄISCHE PATENTSCHRIFT

(11) **EP 3 531 919 B1**
(45) Veröffentlichungstag und Bekanntmachung des Hinweises auf die Patenterteilung: **18.06.2025**
(21) Anmeldenummer: 17788195.0
(22) Anmeldetag: 20.10.2017
(51) Int. Cl.: A61B 8/00, G01N 29/04, G01S 15/89

(54) **VERFAHREN UND VORRICHTUNG ZUR UNTERSUCHUNG EINER PROBE**
METHOD AND DEVICE FOR ANALYZING A SAMPLE
PROCÉDÉ ET DISPOSITIF D'ANALYSE D'UN ÉCHANTILLON

(30) Priorität: 26.10.2016 DE 102016120454
(43) Veröffentlichungstag der Anmeldung: 04.09.2019
(73) Patentinhaber: Bundesrepublik Deutschland, Vertreten Durch den Bundesminister für Wirtschaft und Energie, dieser Vertreten durch den Präsidenten der, 12205 Berlin (DE)
(72) Erfinder: STRANGFELD, Christoph, 10965 Berlin (DE); MAACK, Stefan, 12557 Berlin (DE)
(74) Vertreter: Zimmermann & Partner Patentanwälte mbB
(86) Internationale Anmeldenummer: PCT/EP2017/076908
(87) Internationale Veröffentlichungsnummer: WO 2018/077759

(56) Entgegenhaltungen:
- EP-A1- 1 742 047
- DE-B3- 102007 030 270
- GB-A- 1 308 649
- US-A- 3 463 716
- US-A1- 2011 122 727
- US-A1- 2012 146 805

## Beschreibung

Die vorliegende Erfindung betrifft ein Verfahren zur Untersuchung eines Prüflings, insbesondere ein zerstörungsfreies Prüfverfahren mittels Schall, sowie eine entsprechende Vorrichtung.

Die Verwendung energetischer Schallimpulse zur Detektion von Strukturen, Prozessen sowie Parametern ist sowohl in der Forschung als auch in der Industrie weit verbreitet. Insbesondere, aber nicht ausschließlich, werden diese in der zerstörungsfreien Prüfung und in der Medizintechnik verwendet. Trifft ein definiertes zeitlich gesteuerten Signals, insbesondere Impulse oder Schwingungen, auf eine innere oder äußere Phasengrenze einer zu untersuchende Probe, im Folgenden auch als Untersuchungsobjekt bezeichnet, z.B. einen Prüfkörper, so kommt es zu energetischen Wechselwirkungen. Hierbei kann ein Teil der eingeprägten Energie zurückgeworfen und von einem Empfänger registriert werden. Basierend auf den empfangenen Signalen können Rückschlüsse auf die Eigenschaften des Untersuchungsobjektes gezogen werden.

Dabei ist es günstig, möglichst viel Energie des Senders in das zu untersuchende Objekt einzubringen und die Verluste durch Randbedingungen und/oder Umgebungseffekte gering zu halten.

Es existieren bereits verschiedene technische Verfahren zur Schallanregung von Proben bzw. Prüflingen. Hierfür werden als Sender bisher Wandler verwendet, die nach verschiedenen physikalischen Grundprinzipen arbeiten. Beispiele sind Wandler mit schwingenden Membranen, piezoelektrische Wandler und thermoakustische Wandler. Die auf diesen Wirkprinzipen arbeiten Wandler sind in der Regel hinsichtlich ihrer Sendeleistung jedoch begrenzt und / oder sind an Phasengrenzen stark verlustbehaftet. Dies führt dazu, dass die Energie der in das Untersuchungsobjekt eingekoppelten Signale im Vergleich zur Anregungsenergie sehr klein ist, was zu einem hohen technischen Aufwand, insbesondere bei der Aufzeichnung der für die Auswertung erforderlichen Signale führt. Weiterhin haben diese Wandler eine begrenzte Lebensdauer, die stark von der Intensität der Nutzung abhängt.

DE 10 2007 030 270 B3 beschreibt beispielhaft ein technisches Verfahren zur Schallanregung nach dem Stand der Technik.

US 2011/122727 A1 beschreibt ein Verfahren und eine Vorrichtung zur Untersuchung eines Bohrlochsystems und einer unterirdischen Formation nach dem Stand der Technik.

Im Hinblick auf das oben Gesagte, schlägt die vorliegende Erfindung ein Verfahren gemäß Anspruch 1, eine Vorrichtung gemäß Anspruch 10 und eine Verwendung gemäß Anspruch 14 vor.

Gemäß einer Ausführungsform weist ein Verfahren zur Untersuchung eines Prüflings ein Anregen einer sich ausbreitenden mechanischen Deformation in dem Prüfling mittels eines Anregungssignals, das von einem Freistrahl transportiert wird, der von einem fluidischen Oszillator ausgeht, und eine Frequenz von mindestens 16kHz aufweist, und ein Bestimmen einer Charakteristik der mechanischen Deformation auf.

Bei der mechanischen Deformation handelt es sich typischerweise um eine elastische Deformation.

Fluidische Oszillatoren können verschiedene Bauformen aufweisen, siehe dazu bspw. die Druckschriften US 3902367 A und US 3247861 A, verzichten aber beim Aufrechterhalten einer Oszillation eines sie durchströmenden Fluids, d.h. eines Materials oder Stoffs, welcher in Ruhelage keine Schubspannungen aufnehmen kann, insbesondere eines Gases oder einer Flüssigkeit, auf mechanisch schwingende Komponenten oder sogar vollständig auf mechanisch bewegte Komponenten. Fluidische Oszillatoren sind daher sehr robust, langlebig, gut skalierbar und gut steuerbar.

Der Begriff "fluidischer Oszillator", wie er vorliegend verwendet wird, soll eine Vorrichtung zur Erzeugung einer Oszillation eines Fluids beschreiben, die einen Hauptkanal für das Fluid aufweist und die keine beweglichen Teile oder Komponenten, aufweist, die im Hauptkanal angeordnet sind und/oder die auf das Fluid eine Kraft ausüben, die in eine Strömungsrichtung des Fluids wirken, wenn das Fluid den Hauptkanal durchströmt. Insbesondere soll der Begriff "fluidischer Oszillator", wie er vorliegend verwendet wird, eine Vorrichtung zur Erzeugung einer selbsterregten und selbsterhaltenen Oszillation eines Fluids umfassen, die zum Aufrechterhalten der Oszillation des Fluids keine beweglichen Teile oder Komponenten, insbesondere keine mechanisch schwingenden Teile oder Komponenten benötigt und/oder aufweist.

Fluidische Oszillatoren können über ein angeschlossenes Druckreservoir für das Fluid betrieben werden. Das Fluid strömt druckgetrieben vom Druckreservoir in eine Kammer des fluidischen Oszillators. In einer Ausführung liegt der in der Kammer gebildete Freistrahl des Fluids aufgrund der Kammergeometrie zunächst an einer Seite der Kammer an. Durch einen oder mehrere Feedbackkanäle kann das Drucksignal des Freistahls rückgekoppelt zum Ort vor dem Eintritt in die Kammer werden. Dadurch wird der Strahl umgelenkt und lehnt sich dann an der anderen Seite der Kammer an. In Folge dessen entsteht eine Oszillation, die durch eine natürliche strömungsmechanische Instabilität verursacht ist (selbsterregte Oszillation), ggf. aber auch extern beeinflusst werden kann. Je nach Geometrie der Kammer und/oder einer Auslassdüse für den Freistrahl aus der Kammer lassen sich verschiedenste Oszillationen räumlich als auch zeitlich erzeugen. Die Frequenz der Oszillationen ist neben Bauteilgröße und der Geometrie dabei vom Druckverhältnis zwischen dem Druck des einströmenden Druckreservoirs und dem Umgebungsdruck abhängig. Somit kann die Anregungsfrequenz im Hz-Bereich und/oder dem typischerweise für zerstörungsfreie (nichtschädigende) Untersuchungen von Proben wie Prüfkörpern besonders geeigneten kHz-Bereich und MHz-Bereich sehr einfach durch Änderung des Druckverhältnisses gesteuert werden.

Fluidische Oszillatoren lassen sich zudem sehr gut in deren Bauteilgröße skalieren und behalten dabei ihre Charakteristika.

Die Anregung einer Probe mit dem fluidischen Oszillator erlaubt einen sehr robusten und vielseitig einsetzbaren Messaufbau.

Außerdem können die Verluste bei der Anregung im Vergleich zu den bisher verwendeten Wandlern zumindest erheblich reduziert werden, da die Anregungssignale im Fluid erzeugt und über das Fluid ohne zusätzliche Grenzfläche auf die Probe übertragen werden können. Dies ist besonders bei der luftgekoppelten (Ultra-) Schallprüfung wichtig, da das Anregungssignal auf Grund verschiedener akustischer Schallimpedanzen an Grenzflächen von Luft zu Festkörpern (z.B. eines Piezowandlers) um 35 dB oder sogar mehr gedämpft werden kann.

Wird als Fluid, das auch als ein in Ruhelage schubspannungsfreies Medium definiert werden kann, wie z. B. Luft oder Wasser genutzt, wird zudem die Gefahr empfindliche Probenoberflächen bzw. empfindliche Proben durch den Kontakt zu schädigen erheblich reduziert. Dies ermöglicht auch die schonende Untersuchung weicher Proben. Durch eine kontinuierliche berührungslose Anregung der Signale kann zudem die Dauer der Messung im Vergleich zu punktuell berührenden Messungen deutlich reduziert werden. Somit können die vermessenen Proben unbeschädigt weiterverwendet werden, und/oder Wiederholungsmessungen durchgeführt werden, wodurch die Aussagesicherheit verbessert werden kann.

Der Begriff "Probe", wie er vorliegend verwendet wird, soll die Begriffe Prüfkörper und Prüfling umfassen.

Der Begriff "Ultraschall", wie er vorliegend verwendet wird, soll Schall mit Frequenzen oberhalb des Hörfrequenzbereichs des Menschen, d.h. Schall mit Frequenzen ab etwa 16 kHz beschreiben.

Das Anregen der mechanischen Deformation umfasst typischerweise ein Erzeugen eines Anregungssignals mit dem fluidischen Oszillator und ein Wechselwirken des Anregungssignals mit der Probe. Dazu kann im fluidischen Oszillator ein oszillierender Freistrahl (selbsterregt) erzeugt und auf die Probe gerichtet werden.

Dabei kann das im fluidischen Oszillator verwendete Fluid, z.B. Luft oder Wasser, den fluidischen Oszillator in Richtung der Probe verlassen, z.B. über die Auslassdüse des fluidischen Oszillator. Dies ermöglicht eine besonders effiziente Anregung.

Typischerweise enthält das Anregungssignal mehrere (longitudinale) Druckschwankungen, z.B. mehrere voneinander getrennte Pulse (gepulste Anregung) oder eine Anregungswelle (kontinuierliche Anregung in einem Zeitfenster).

Außerdem ist es möglich, für ein verwendetes Fluid durch die Geometrie und/oder Ausdehnung des verwendeten fluidischen Oszillators, insbesondere der Kammergeometrie, und/oder die Druckverhältnisse, ein für eine jeweilige Messung besonders günstiges Anregungssignal zu erzeugen, z.B. ein Signal mit Pulsen einer vorgegebenen Pulsform und/oder einem vorgegebenen Verhältnis von Pulsbreite zu Pulsabstand bei einem gut über die Druckverhältnisse einstellbarem Pulsabstand.

Dazu kann vor der Messung insbesondere die Kammergeometrie, Feedback-Kanäle und deren Geometrie und/oder die Auslassgeometrie des fluidischen Oszillators mittels Simulationen an eine gewünschte Pulsform angepasst werden, und ein danach entsprechend gefertigter fluidischer Oszillator für die Messung ausgewählt werden.

Wenn das Anregungssignal auf die Probe trifft, kommt es zu einer energetischen Wechselwirkung. Im Ergebnis wird in der Probe beispielsweise eine elastische Welle oder eine Folge von elastischen Wellen, insbesondere Schallwellen bzw. Schallpulse, generiert, die die Probe durchlaufen, ggf. intern reflektiert werden, und als sekundäres Signal wieder austreten.

Durch einen oder mehrere geeignete Detektoren, im Folgenden auch als Sensoren bezeichnet, kann die elastische Welle bzw. das sekundäre Signal detektiert werden.

Das detektierte Signal erlaubt Rückschlüsse auf Strukturen, Prozesse, und/oder Parameter der Probe. In einfachen Fällen können derartige Rückschlüsse direkt aus dem detektierten Signal bzw. einer davon ableitbaren Charakteristik der mechanischen Deformation gezogen werden. Typischerweise sind dazu aber einer oder mehrere geeignete Signalverarbeitungsprozesse vorgesehen, um Charakteristiken wie Signallaufzeiten, Signalgeschwindigkeiten, Modenkonversionen, Signaldämpfungen, und/oder Phasenverschiebungen auf Basis von Modelannahmen zu berechnen.

Dabei kann es auch sinnvoll sein, die Auswertung im Frequenzraum vorzunehmen, bspw. um mittels eines Impact-Echoverfahrens Modenkonversionen zu bestimmen.

Signalverarbeitungsprozesse können insbesondere dann vorgesehen sein, wenn mehrere Detektoren und/oder mehrere fluidische Oszillatoren eingesetzt werden, wenn Messungen für verschiedene Lagebeziehungen zwischen der Probe und dem fluidischen Oszillator ausgeführt werden, z.B. die Probe gescannt wird, wenn Messungen mit Anregungssignalen verschiedener (Träger-) Frequenz ausgeführt werden (z.B. ein Frequenzsweep erfolgt), und/oder wenn Messungen mit verschiedenen Pulsamplituden im Anregungssignal ausgeführt werden.

Zudem ist es auch möglich, mehrere fluidische Oszillatoren für die Untersuchung der Probe einzusetzen.

Aus der bzw. den Charakteristiken der mechanischen Deformation können dann eine Materialeigenschaft der Probe bestimmt, ein Merkmal der Probe, eine Phasengrenze in der Probe, ein Materialfehler und/oder eine Beschädigung der Probe ermittelt oder sogar lokalisiert werden.

Dabei kann eine bildliche Darstellung der ermittelten Materialeigenschaft(en) der Probe vorgesehen sein, etwa eine Falschfarben- oder Grauwertdarstellung wie sie bei Ultraschallprüfverfahren häufig zum Einsatz kommt.

Gemäß einer Ausführungsform weist eine Vorrichtung zur Untersuchung einer Probe einen fluidischen Oszillator zum Erzeugen eines Anregungssignals für die Probe, einen Detektor zum Detektieren einer durch das Anregungssignal erzeugbaren Anregung der Probe, und eine typischerweise als Steuer- und auswerteeinheit ausgeführte Auswerteeinheit auf, die mit dem Detektor koppelbar ist und eingerichtet ist, vom Detektor beim Detektieren der Anregung erzeugte Daten, im Folgenden auch als Messsignal bezeichnet, zu beziehen.

Die Vorrichtung kann eine Ultraschall-Messeinrichtung, insbesondere ein Ultraschall-Prüfgerät für die zerstörungsfreie Untersuchung eines Prüfkörpers, z.B. eines Werkstücks, aber auch ein Ultraschall-Diagnosegerät zur Untersuchung eines Probanden als Prüfling bzw. Untersuchungsgegenstand sein.

Bei der Vorrichtung kann es sich um eine Schallprüfvorrichtung, insbesondere eine Ultraschallprüfvorrichtung handeln. Dementsprechend kann der fluidische Oszillator Teil eines Schallkopfes und/oder einer Schallsonde sein.

Gemäß einer Ausführungsform weist ein Schallprüfkopf und/oder eine Schallsonde einen fluidischen Oszillator auf. Dabei kann es sich um einen Ultraschallprüfkopf bzw. um eine Ultraschallsonde handeln.

Typischerweise ist die Steuer- und auswerteeinheit eingerichtet, unter Verwendung der Daten eine Charakteristik der Anregung zu bestimmen und/oder die hierin beschriebenen Verfahren auszuführen.

Bei dem Detektor kann es sich bspw. um einen Dehnungssensor, einen Schwingungsaufnehmer, einen piezoelektrischen oder elektrostatischen Detektor handeln. Der Detektor kann aber auch von einem Laser-Vibrometer gebildet werden und/oder ein Laser-Vibrometer umfassen.

Außerdem kann die Vorrichtung mehrere typischerweise gleichartige Detektoren und/oder mehrere fluidische Oszillatoren umfassen.

Typischerweise weist der fluidische Oszillator eine Kammer mit einem Einlass und einem Auslass, der als Düse ausgeführt sein kann (Auslassdüse), auf.

Außerdem ist der Einlass typischerweise fluidisch mit einem Druckreservoir für das Fluid verbunden.

Die Kammer kann einen zwischen dem Einlass und dem Auslass angeordneten Hauptkanal und einen oder auch mehrere fluidisch mit dem Hauptkanal gekoppelte Rückkopplungskanäle aufweisen.

Das Druckreservoir kann zudem fluidisch mit einer typischerweise von der Steuer- und auswerteeinheit ansteuerbaren Druckpumpe verbunden sein.

Zwischen der Druckpumpe und dem Druckreservoir und/oder zwischen dem Druckreservoir und dem Einlass der Kammer kann ein jeweiliges Ventil angeordnet sein, das typischerweise von der Steuer- und auswerteeinheit ansteuerbar ist.

Typischerweise ist die Steuer- und auswerteeinheit eingerichtet, das Erzeugen des Anregungssignals auszulösen, z.B. über das Ventil und/oder die Druckpumpe.

Außerdem kann der fluidische Oszillator fluidisch mit einem Drucksensor zur Kontrolle der erzeugten Oszillation verbunden sein oder diesen aufweisen.

Der Drucksensor ist typischerweise mit der Steuer- und auswerteeinheit verbunden.

Gemäß einer Ausführungsform wird während einer Untersuchung einer Probe ein fluidischer Oszillator zur Anregung einer sich in der Probe ausbreitenden mechanischen Deformation, insbesondere einer elastischen Welle und/oder einer Schallwelle, verwendet.

Gemäß noch einer Ausführungsform weist ein Computerprogrammprodukt, insbesondere ein computerlesbarer Datenträger, zum Beispiel ein magnetisch, elektrisch oder optisch auslesbarer Datenträger, Programmbefehle auf, die geeignet sind, einen Prozessor einer Steuer- und auswerteeinheit, z.B. einen Computer, zu veranlassen, die hierin beschriebenen Verfahren auszuführen und/oder zu steuern.

Die vorstehend beschriebenen Ausführungsformen können beliebig miteinander kombiniert werden.

Weitere vorteilhafte Ausgestaltungen, Einzelheiten, Aspekte und Merkmale der vorliegenden Erfindung ergeben sich aus den Unteransprüchen, der Beschreibung sowie den beigefügten Zeichnungen.Darin zeigt:
Fig. 1A eine schematische Darstellung einer Vorrichtung zur Untersuchung einer Probe gemäß einem Ausführungsbeispiel;
Fig. 1B eine schematische Darstellung eines Ausschnitts der in Fig. 1A dargestellten Vorrichtung zur Untersuchung einer Probe gemäß einem Ausführungsbeispiel;
Fig. 2A eine schematische Darstellung einer Vorrichtung zur Untersuchung einer Probe gemäß einem Ausführungsbeispiel;
Fig. 2B eine schematische Darstellung einer Vorrichtung zur Untersuchung einer Probe gemäß einem Ausführungsbeispiel;
Fig. 2C typische Signale, wie sie mit den in den Figuren 1A bis 2B dargestellten Vorrichtungen erzeugt und gemessen werden können; und
Fig. 2D Schritte eines Verfahrens zur Untersuchung einer Probe gemäß einem Ausführungsbeispiel.

In den Figuren bezeichnen gleiche Bezugszeichen entsprechend ähnliche Teile.

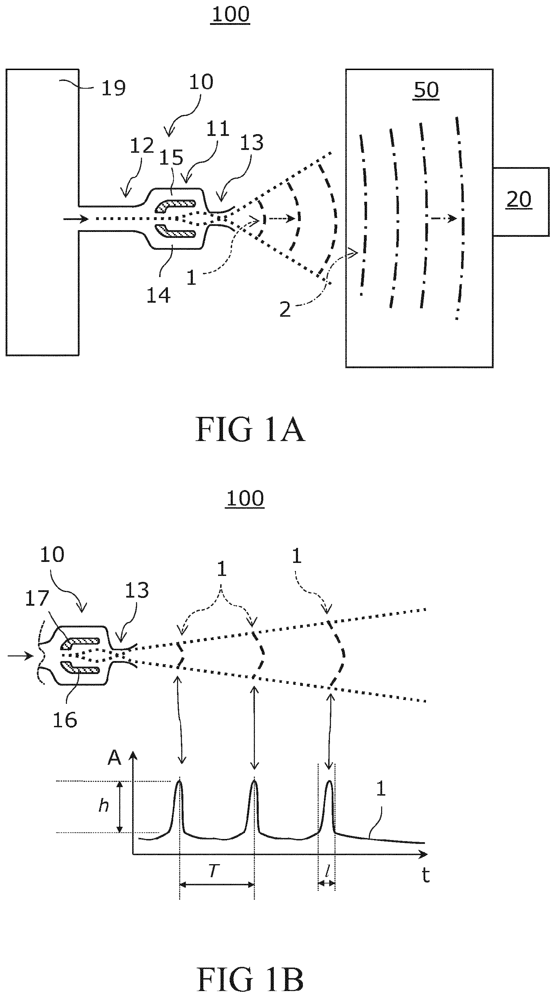

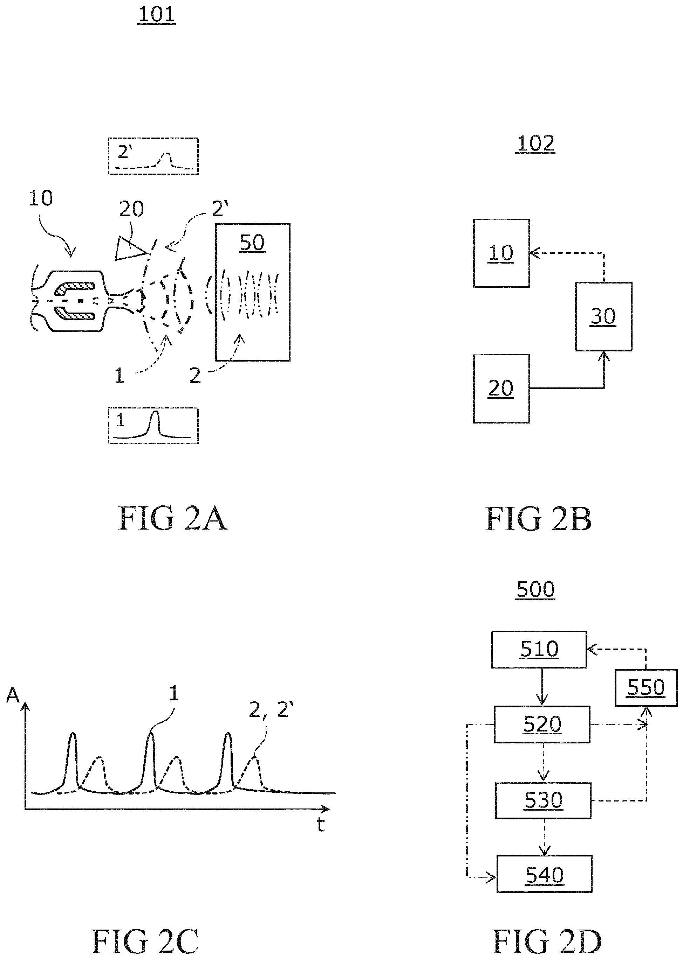

Fig. 1A zeigt eine schematische Darstellung einer Vorrichtung 100 zur Untersuchung einer Probe 50 bspw. eines Festköperprüfkörpers. Da die Vorrichtung 100 typischerweise eine Prüfvorrichtung ist, wird sie im Folgenden auch als Prüfvorrichtung 100 bezeichnet. Fig. 2A zeigt einen zentralen Ausschnitt der Prüfvorrichtung 100. Die Figuren 1A und 1B zeigen die Prüfvorrichtung 100 während der Untersuchung bzw. der Prüfung der Probe 50.

Die Prüfvorrichtung 100 hat einen fluidischen Oszillator 10 zum Erzeugen eines Anregungssignals 1 mit einem Fluid wie z.B. Luft oder Wasser.

In dem exemplarischen Ausführungsbeispiel wird der fluidische Oszillator 10 von einem Druckreservoir 19 mit dem Fluid versorgt. Wie vom durchgehenden Pfeil angezeigt wird, strömt das Fluid aus dem Druckreservoir 19 in einen Einlass 12 einer Kammer 11 des fluidischen Oszillators 10 und bildet einen als gepunktete Kurve dargestellten Freistrahl. In der Kammer 11 des fluidischen Oszillators 10 sind keine beweglichen Teile angeordnet.

Der Freistrahl bewegt sich durch einen zentralen Hauptkanal, der in einem zentralen Kammerbereich durch zwei typischerweise spiegelsymmetrisch angeordnete Zwischenwände 16, 17 von zwei Rückkopplungskanälen 15, 16 getrennt ist. Stromaufwärts und stromabwärts sind die Rückkopplungskanäle 15, 16 jedoch mit dem Hauptkanal verbunden. Der Hauptkanal mündet in einer Auslassdüse 13 des fluidischen Oszillators 10, durch die der Freistrahl den fluidischen Oszillator 10 verlassen kann.

Wie durch die Verzweigung der gepunkteten Kurve dargestellt wird, oszilliert der Freistrahl selbsterregt im fluidischen Oszillator 10. Da die Auslassdüse 13 auf eine Oberfläche, zum Beispiel eine Vorderseite der Probe 50 gerichtet ist, wird die Probe 50 einem vom oszillieren Freistrahl transportierten Anregungssignal 1 ausgesetzt.

In dem exemplarischen Ausführungsbeispiel führt dies zu einer Anregung der Probe in Form einer elastischen Deformation bzw. Welle 2 der Probe 50, die mit einem Detektor 20 detektiert werden kann.

Der fluidische Oszillator 10 ist wie in Figur 1A dargestellt typischerweise von der Probe 50 beabstandet angeordnet. Beispielsweise kann die Vorrichtung 100 jeweilige Halter (nicht dargestellt) für den fluidischen Oszillator 10 und die Probe 50 aufweisen. Die Halter können zueinander verschieb- und/oder orientierbar angeordnet sein.

Der Detektor 20 kann wie in Figur 1A dargestellt als Schall oder Dehnungsdetektor auf einer Rückseite oder auf einer anderen Oberfläche der Probe 50 angeordnet sein. Dabei kann zwischen dem Detektor 20 und der Oberfläche der Probe 50 ein Koppelmittel angeordnet sein.

Wenn der Detektor 20 auf der Rückseite angeordnet ist, können in der Probe 50 nicht reflektierte primäre Anregungen 2 besonders gut detektiert werden.

Je nach Probe 50 ist es aber auch möglich, die Anregung(en) 2 berührungslos zu detektieren, zum Beispiel mit einem Laservibrometer, einem (luftgekoppelten)Mikrophon oder einem (luftgekoppelten) Piezodetektor.

Figur 1B zeigt im unteren Teil die Amplitude A einer Auslenkung oder eines Schalldrucks als Funktion der Zeit t dreier mit dem fluidischen Oszillator 10 erzeugbarer Schallpulse eines exemplarischen Anregungssignals 1. Die Form der Pulse aber auch das Verhältnis von Pulsbreite *l* zu Pulsabstand *T* werden maßgeblich durch die Größe und Geometrie der Kammer 11 und der Auslassdüse 13 bestimmt. Der Pulsabstand *T* und die Pulsbreite *l* lassen sich gut über die Druckverhältnisse und die Bauteilgröße steuern. Die Höhe der Pulse h hängt bei gegebenem Fluid sowohl von der Größe und Geometrie des fluidischen Oszillators als auch von den Druckverhältnissen ab.

Fig. 2A zeigt eine schematische Darstellung eines zentralen Ausschnitts einer Vorrichtung 101 zur Untersuchung einer Probe 50. Die Vorrichtung 101 ist ähnlich zu der oben mit Bezug zu den Figuren 1A und 1B erläuterten Vorrichtung 100.

In dem in Figur 2A gezeigten exemplarischen Ausführungsbeispiel ist der Detektor 20 jedoch vor der mit dem Anregungssignal 1 beaufschlagten Vorderseite der Probe 50 angeordnet. Dementsprechend können vom Detektor 20 insbesondere in der Probe 50 reflektierte und von der Vorderseite abgestrahlte (sekundäre) Signale der Anregungen 2' empfindlich detektiert werden.

Außerdem zeigt Figur 2A in jeweiligen gestrichelten Kästchen einen exemplarischen Anregungspuls des Anregungssignals 1 und einen zugehörigen, phasenverschobenen Puls des Messsignals 2'.

Wie aus Figur 2B, die schematisch eine zu den oben mit Bezug zu den Figuren 1A bis 2A erläuterten Vorrichtungen 100, 101 ähnliche Vorrichtung 102 zur Untersuchung von Proben zeigt, ersichtlich ist, werden die vom Detektor 20 ermittelten Messsignale, im Folgenden auch als Daten bezeichnet, typischerweise an eine Auswerteeinheit 30 übermittelt.

Typischerweise ist die Auswerteeinheit 30 eine Steuer- und auswerteeinheit 30, zum Beispiel ein mit entsprechenden Kommunikationsschnittstellen und Software versehener Computer oder eine andere elektronische Datenverarbeitungsanlage, die das Erzeugen des Anregungssignals (1) auszulösen kann, zum Beispiel über das Schalten eines nicht dargestellten Ventils bzw. einer nicht dargestellten Pumpe zur Versorgung eines Druckreservoirs für den fluidischen Oszillator 10.

Figur 2C zeigt drei Pulse eines typischen Anregungssignals 1 und drei Pulse eines typischen korrespondierenden Messsignals 2, 2', jeweils als von der Zeit t abhängige Amplitude A einer Auslenkung oder des Schalldrucks, wie sie mit einer der in den Figuren 1A bis 2B dargestellten Vorrichtung 100 -102 erzeugt bzw. gemessen werden können und die zum Bestimmen einer Charakteristik der durch das Anregungssignal 1 angeregten mechanischen Deformation der Probe verwendet werden können.

Fig. 2D zeigt ein Blockschema eines Verfahrens 500 zur Untersuchung einer Probe. In einem Block 510 erfolgt ein Anregen einer sich ausbreitenden mechanische Deformation in der Probe mittels eines fluidischen Oszillators.

Dazu wird typischerweise mit dem fluidischen Oszillator ein Anregungssignal erzeugt und in Wechselwirkung mit der Probe gebracht.

In einem Block 520 kann dann die Charakteristik der mechanischen Deformation bestimmt werden.

Dazu wird typischerweise mit einem Detektor ein mit der mechanischen Anregung der Probe korreliertes Messsignals detektiert.

Außerdem wird das Messsignal typischerweise an eine Auswerteeinheit übermittelt und/oder grafisch dargestellt.

Bei der Charakteristik kann es sich um eine Laufzeit, eine Ausbreitungsgeschwindigkeit, eine Modenkonversion, eine Dämpfung, eine Phasenverschiebung zum Anregungssignal oder eine von einer oder mehrerer dieser Größen abgeleitete Größe handeln.

In einem Block 530 kann die Charakteristik dann zur Bestimmung einer Materialeigenschaft der Probe, z.B. einer Dichte oder eines Elastizitätsmoduls verwendet werden.

Wie durch den Strich-Punkt-Pfeil in Fig. 2D dargestellt wird kann alternativ oder ergänzend ein weiterer Messzyklus mit den Blöcken 510, 520 eingeleitet werden, wobei in einem optionalen Block 550 zunächst ein Messparameter oder auch mehrere Messparameter geändert werden.

Als Messparameter kommen dabei insbesondere die Lagebeziehung zwischen der Probe und dem fluidischen Oszillator, die Lagebeziehung zwischen der Probe und dem Detektor, die Frequenz des Anregungssignals, die Pulsbreite und -form und die Amplitude(n) des Anregungssignals (z.B. die Amplitude(n) der Schallpulse des Anregungssignals) in Frage.

Außerdem kann auch im Anschluss an den Block 530 ein (oder auch mehrere) weiterer Messzyklus (510, 520) mit verändertem Messparameter(n) eingeleitet werden. Beispielsweise kann der weitere Messzyklus (510, 520) bei veränderter Lagebeziehung zwischen der Probe und dem fluidischen Oszillator (insbesondere Abscannen der Probe) erfolgen.

Schließlich kann vorgesehen sein, in einem Block 540 das Vorliegen einer Phasengrenze und/oder eines Fehlers (oder auch mehrerer Fehler) in der Probe, insbesondere eines Materialfehlers oder einer Beschädigung der Probe zu detektieren oder sogar zu lokalisieren.

Während für das Lokalisieren des Fehlers typischerweise mehrere Messzyklen (510, 520) verwendet werden, kann in vielen Fällen auf das Vorliegen eines Fehlers anhand eines Messzyklus (510, 520) geschlossen werden, z.B. bei der Überprüfung von in Serie gefertigten Teilen in der Qualitätskontrolle.

Beispielsweise kann die im Block 520 bestimmte Charakteristik der mechanischen Deformation auch eine Abweichung des Messsignals von einem erwarteten Messsignal (eines Normteils) sein. Im Block 540 kann dann bspw. die Abweichung mit einem Schwellenwert verglichen werden.

Außerdem kann vor dem Block 510 ein für die Messung besonders geeignet erscheinender fluidischer Oszillator, d.h. ein an eine gewünschte Pulsform des Anregungssignals gut angepasster fluidischer Oszillator, berechnet, gefertigt, ausgewählt und/oder in den Aufbau bzw. die Prüfvorrichtung eingebaut werden.

Gemäß einer Ausführungsform weist ein Verfahren zur Untersuchung einer Probe ein Erzeugen eines Anregungssignals mit einem fluidischen Oszillator, ein Wechselwirken des Anregungssignals mit der Probe zum Erzeugen einer mechanischen Anregung der Probe, insbesondere einer elastischen Anregung der Probe, und ein Detektieren eines mit der Anregung der Probe korrelierten Messsignals mit einem Detektor auf.

Gemäß einer Ausführungsform umfasst ein Prüfverfahren zur zerstörungsfreien Untersuchung einer Probe, typischerweise eines Prüfkörpers, ein Erzeugen eines Anregungssignals aufweisend eine Frequenz, die im kHz-Bereich oder darüber liegt (Frequenzbereich ab 16 kHz), mit einem fluidischen Oszillator und ein Wechselwirken des Anregungssignals mit der Probe, typischerweise mit einer Oberfläche der Probe, zum Anregen einer sich in der Probe ausbreitenden mechanischen Deformation, und ein Bestimmen einer Charakteristik der sich in der Probe ausbreitenden mechanischen Deformation.

Gemäß einer Ausführungsform weist eine Schall-Messeinrichtung, insbesondere eine Ultraschall-Messeinrichtung einen fluidischen Oszillator zum Erzeugen eines Anregungssignals für einen Untersuchungsgegenstand, und einen Detektor zum Detektieren einer durch das Anregungssignal erzeugbaren Anregung des Untersuchungsgegenstands auf.

Die Schall-Messeinrichtung kann eine Ultraschall-Diagnosegerät oder ein Ultraschall-Prüfgerät sein.

Typischerweise weist die Schall-Messeinrichtung weiter eine Auswerteeinheit auf, die mit dem Detektor koppelbar ist und eingerichtet ist, vom Detektor beim Detektieren der Anregung erzeugte Daten zu beziehen.

Gemäß einer Ausführungsform wird ein fluidischer Oszillator zur Anregung einer sich in einer Probe, typischerweise einem Prüfkörper, ausbreitenden mechanischen Deformation im kHz-Bereich, im MHz-Bereich oder sogar darüber (Frequenzbereich ab 16 kHz), typischerweise einer Schallwelle im kHz-Bereich oder MHz-Bereich, noch typischer einer Ultraschallwelle, während einer zerstörungsfreien Untersuchung der Probe verwendet. Dazu erzeugt der fluidische Oszillator typischerweise einen Freistrahl der ein Anregungssignals im kHz-Bereich und/oder MHz-Bereich transportiert und typischerweise auf die Probe überträgt. Die vorliegende Erfindung wurde anhand von Ausführungsbeispielen erläutert. Diese Ausführungsbeispiele sollten keinesfalls als einschränkend für die vorliegende Erfindung verstanden werden.

## Patentansprüche

1. Verfahren (500) zur Untersuchung eines Prüflings (50), umfassend:
- Anregen einer sich ausbreitenden mechanischen Deformation (2) in dem Prüfling (50) mittels eines Anregungssignals (1), das von einem Freistrahl transportiert wird, der von einem fluidischen Oszillator (10) ausgeht, und eine Frequenz von mindestens 16 kHz aufweist; und
- Bestimmen einer Charakteristik der mechanischen Deformation (2).

2. Verfahren nach Anspruch 1, wobei das Anregen der mechanischen Deformation (2)
- ein Erzeugen des Anregungssignals (1) mit dem fluidischen Oszillator (10); und
- ein Wechselwirken des Anregungssignals (1) mit dem Prüfling (50) umfasst.

3. Verfahren nach Anspruch 1 oder 2, weiter umfassend:
- Bestimmen einer Materialeigenschaft des Prüflings (50) unter Verwendung der Charakteristik;
- Bestimmen einer Phasengrenze in dem Prüfling (50) unter Verwendung der Charakteristik;
- Bestimmen eines Materialfehlers des Prüflings (50) unter Verwendung der Charakteristik;
- Designen und/oder Auswählen eines fluidischen Oszillators (10) aufweisend eine Geometrie und/oder eine Ausdehnung, so dass der fluidische Oszillator (10) eine Anregungssignal (1) mit einer vorgegebenen Pulsform für ein gegebenes Fluid erzeugen kann;
- Einstellen und/oder Variieren einer Lagebeziehung zwischen dem Prüfling (50) und dem fluidischen Oszillator (10);
- Einstellen und/oder Variieren einer Frequenz des Anregungssignals (1); und/oder
- Einstellen und/oder Variieren einer Amplitude des Anregungssignals (1).

4. Verfahren nach einem der vorangehenden Ansprüche, wobei das Bestimmen der Charakteristik ein Detektieren eines mit der mechanischen Anregung des Prüflings korrelierten Messsignals (2, 2') mit einem Detektor (20), ein Messen der mechanischen Deformation (2), und/oder ein Messen eines von dem Prüfling (50) ausgesandten sekundären Signals (2') mit einem Detektor (20) umfasst.

5. Verfahren nach einem der vorangehenden Ansprüche, wobei das Anregungssignal (1) ein Schallsignal ist, wobei das Anregungssignal (1) mehrere Pulse mit einem vorgegebenen oder einstellbaren Pulsabstand (T) aufweist, wobei die mechanischen Deformation (2) eine Schallwelle umfasst, und/oder wobei das sekundäre Signal (2') ein Schallsignal ist.

6. Verfahren nach einem der vorangehenden Ansprüche, wobei die Charakteristik eine Laufzeit, eine Ausbreitungsgeschwindigkeit, eine Modenkonversion, eine Dämpfung, eine Phasenverschiebung zum Anregungssignal (1) oder eine von einer oder mehrerer dieser Größen abgeleitete Größe ist.

7. Verfahren nach einem der vorangehenden Ansprüche, wobei das Verfahren ein Verfahren zur zerstörungsfreien Untersuchung des Prüflings (50) ist, wobei der Prüfling ein Werkstück ist, wobei das Verfahren ein zerstörungsfreies Prüfverfahren ist, wobei das Verfahren ein akustisches Prüfverfahren ist, und/oder wobei das Verfahren ein Schallprüfverfahren, insbesondere ein Ultraschallprüfverfahren ist.

8. Verfahren nach einem der vorangehenden Ansprüche, wobei die sich ausbreitende mechanische Deformation (2) eine elastische Welle ist, wobei die sich ausbreitende mechanische Deformation (2) eine Schallwelle ist, wobei die sich ausbreitende mechanische Deformation (2) eine Frequenz von mindestens 16 kHz aufweist, wobei die sich ausbreitende mechanische Deformation (2) eine Frequenz im kHz-Bereich aufweist, und/oder wobei die sich ausbreitende mechanische Deformation (2) eine Frequenz im MHz-Bereich aufweist.

9. Verfahren nach einem der Ansprüche 2 bis 8, wobei das Anregungssignal (1) mit einer Oberfläche des Prüflings (50) wechselwirkt, wobei das Anregungssignal (1) eine Frequenz im kHz-Bereich aufweist, und/oder wobei das Anregungssignal (1) eine Frequenz im MHz-Bereich aufweist.

10. Vorrichtung (100-102) zur Untersuchung eines Prüflings (50), umfassend:
- einen fluidischen Oszillator (10) zum Erzeugen eines Anregungssignals (1) für den Prüfling (50), wobei der fluidische Oszillator (10) eingerichtet ist, das Anregungssignals (1) so zu erzeugen, dass das Anregungssignal (1) von einem von dem fluidischen Oszillator (10) ausgehenden Freistrahl transportiert wird und eine Frequenz von mindestens 16 kHz aufweist;
- einen Detektor (20) zum Detektieren einer durch das Anregungssignal (1) erzeugbaren Anregung (2) des Prüflings (50); und
- eine Auswerteeinheit (30), die mit dem Detektor (20) koppelbar ist und eingerichtet ist, vom Detektor beim Detektieren der Anregung (2) erzeugte Daten zu beziehen.

11. Vorrichtung nach Anspruch 10, wobei die Vorrichtung eine Schallprüfvorrichtung und/oder eine Ultraschallprüfvorrichtung ist, wobei die Auswerteeinheit (30) eine Steuer- und auswerteeinheit (30) ist, die eingerichtet ist, das Erzeugen des Anregungssignals (1) auszulösen, und/oder wobei die Steuer- und auswerteeinheit (30) eingerichtet ist, unter Verwendung der Daten eine Charakteristik der Anregung (2) zu bestimmen und/oder ein Verfahren nach einem der Ansprüche 1 bis 7 auszuführen.

12. Vorrichtung nach Anspruch 10 oder 11, wobei der fluidische Oszillator (10) eingerichtet ist, das Anregungssignals (1) so zu erzeugen, dass das Anregungssignal (1) eine Frequenz im kHz-Bereich aufweist, dass das Anregungssignal (1) eine Frequenz im MHz-Bereich aufweist, dass das Anregungssignal (1) mehrere Pulse mit einem vorgebbaren und/oder einstellbaren Pulsabstand (T) aufweist, und/oder dass das Anregungssignal (1) ein Schallsignal ist.

13. Vorrichtung nach einem der Ansprüche 10 bis 12, wobei die Vorrichtung (100-102) eine Prüfvorrichtung zur zerstörungsfreien Untersuchung des Prüflings (50) ist, und/oder wobei der Prüfling ein Werkstück ist.

14. Verwendung eines fluidischen Oszillator (10) zur Anregung einer sich in einem Prüfling (50) ausbreitenden mechanischen Deformation (2), insbesondere einer Schallwelle, mittels eines im fluidischen Oszillator (10) erzeugten oszillierenden Freistrahls aufweisend eine Frequenz von mindestens 16 kHz während einer Untersuchung des Prüflings (50).

## Claims

1. A method (500) for examining a test specimen (50), the method comprising:
- exciting a propagating mechanical deformation (2) in the test specimen (50) by means of an excitation signal (1) transported by a free jet emanating from a fluidic oscillator (10) and having a frequency of at least 16 kHz; and
- determining a characteristic of the mechanical deformation (2).

2. The method according to claim 1, wherein the exciting of the mechanical deformation (2) comprises:
- generating the excitation signal (1) with the fluidic oscillator (10); and
- interacting of the excitation signal (1) with the test specimen (50).

3. The method according to claim 1 or 2, further comprising:
- determining a material property of the test specimen (50) using the characteristic;
- determining a phase boundary in the test specimen (50) using the characteristic;
- determining a material defect of the test specimen (50) using the characteristic;
- designing and/or selecting a fluidic oscillator (10) having a geometry and/or an extension so that the fluidic oscillator (10) can generate an excitation signal (1) with a predetermined pulse shape for a given fluid;
- setting and/or varying a positional relationship between the test specimen (50) and the fluidic oscillator (10);
- adjusting and/or varying a frequency of the excitation signal (1); and/or
- setting and/or varying an amplitude of the excitation signal (1).

4. The method according to any one of the preceding claims, wherein determining the characteristic comprises detecting, with a detector (20), a measurement signal (2, 2') correlated with the mechanical excitation of the test specimen, measuring the mechanical deformation (2), and/or measuring a secondary signal (2') emitted by the test specimen (50) with a detector (20).

5. The method according to any one of the preceding claims, wherein the excitation signal (1) is a sound signal, wherein the excitation signal (1) comprises a plurality of pulses with a predetermined or adjustable pulse spacing (T), wherein the mechanical deformation (2) comprises a sound wave, and/or wherein the secondary signal (2') is a sound signal.

6. The method according to any of the preceding claims, wherein the characteristic is a propagation time, a propagation velocity, a mode conversion, an attenuation, a phase shift with respect to the excitation signal (1) or a quantity derived from one or more of these quantities.

7. The method according to any one of the preceding claims, wherein the method is a method for non-destructive testing of the test specimen (50), wherein the test specimen is a workpiece, wherein the method is a non-destructive testing method, wherein the method is an acoustic testing method, and/or wherein the method is a sonic testing method, in particular an ultrasonic testing method.

8. The method according to any of the preceding claims, wherein the propagating mechanical deformation (2) is an elastic wave, wherein the propagating mechanical deformation (2) is a sound wave, wherein the propagating mechanical deformation (2) has a frequency of at least 16 kHz, wherein the propagating mechanical deformation (2) has a frequency in the kHz range, and/or wherein the propagating mechanical deformation (2) has a frequency in the MHz range.

9. The method according to any one of claims 2 to 8, wherein the excitation signal (1) interacts with a surface of the test specimen (50), wherein the excitation signal (1) has a frequency in the kHz range, and/or wherein the excitation signal (1) has a frequency in the MHz range.

10. A device (100-102) for examining a test specimen (50), comprising:
- a fluidic oscillator (10) for generating an excitation signal (1) for the test specimen (50), wherein the fluidic oscillator (10) is configured to generate the excitation signal (1) such that the excitation signal (1) is transported by a free jet emanating from the fluidic oscillator (10) and has a frequency of at least 16 kHz;
- a detector (20) for detecting an excitation (2) of the test specimen (50) which can be generated by the excitation signal (1); and
- an evaluation unit (30) which can be coupled to the detector (20) and is configured to obtain data generated by the detector when detecting the excitation (2).

11. The device according to claim 10, wherein the device is a sound testing device and/or an ultrasonic testing device, wherein the evaluation unit (30) is a control and evaluation unit (30) which is configured to trigger the generating of the excitation signal (1), and/or wherein the control and evaluation unit (30) is configured to determine a characteristic of the excitation (2) using the data and/or to carry out the method according to any of the claims 1 to 7.

12. The device according to claim 10 or 11, wherein the fluidic oscillator (10) is configured to generate the excitation signal (1) in such a way that the excitation signal (1) has a frequency in the kHz range, that the excitation signal (1) has a frequency in the MHz range, that the excitation signal (1) has a plurality of pulses with a predeterminable and/or adjustable pulse spacing (T), and/or that the excitation signal (1) is a sound signal.

13. The device according to any one of claims 10 to 12, wherein the device (100-102) is a testing device for non-destructive testing of the test specimen (50), and/or wherein the test specimen is a workpiece.

14. Use of a fluidic oscillator (10) for exciting a mechanical deformation (2) propagating in a test specimen (50), in particular a sound wave, by means of an oscillating free jet generated in the fluidic oscillator (10) and having a frequency of at least 16 kHz during an examination of the test specimen (50).

## Revendications

1. Procédé (500) pour examiner un échantillon d'essai (50), comprenant:
- l'excitation d'une déformation mécanique se propageant (2) dans l'échantillon d'essai (50) au moyen d'un signal d'excitation (1) qui est transporté par un jet libre qui provient d'un oscillateur fluidique (10) et présente une fréquence d'au moins 16 kHz; et
- la détermination d'une caractéristique de la déformation mécanique (2).

2. Procédé selon la revendication 1, dans lequel l'excitation de la déformation mécanique (2) comprend:
- une production du signal d'excitation (1) avec l'oscillateur fluidique (10); et
- une interaction du signal d'excitation (1) avec l'échantillon d'essai (50).

3. Procédé selon la revendication 1 ou 2, comprenant en outre:
- la détermination d'une propriété matérielle de l'échantillon d'essai (50) à l'aide de la caractéristique;
- la détermination d'une limite de phase dans l'échantillon d'essai (50) à l'aide de la caractéristique;
- la détermination d'un défaut matériel de l'échantillon d'essai (50) à l'aide de la caractéristique;
- la conception et/ou la sélection d'un oscillateur fluidique (10) présentant une géométrie et/ou une extension de sorte que l'oscillateur fluidique (10) peut produire un signal d'excitation (1) avec une forme d'impulsion prédéterminée pour un fluide donné;
- le réglage et/ou la variation d'une relation de position entre l'échantillon d'essai (50) et l'oscillateur fluidique (10);
- le réglage et/ou la variation d'une fréquence du signal d'excitation (1); et/ou
- le réglage et/ou la variation d'une amplitude du signal d'excitation (1).

4. Procédé selon l'une des revendications précédentes, dans lequel la détermination de la caractéristique comprend une détection d'un signal de mesure (2, 2') corrélé avec l'excitation mécanique de l'échantillon d'essai avec un détecteur (20), une mesure de la déformation mécanique (2), et/ou une mesure d'un signal secondaire (2') émis par l'échantillon d'essai (50) avec un détecteur (20).

5. Procédé selon l'une des revendications précédentes, dans lequel le signal d'excitation (1) est un signal sonore, dans lequel le signal d'excitation (1) présente plusieurs impulsions avec un espacement d'impulsions (T) prédéterminé ou réglable, dans lequel la déformation mécanique (2) comprend une onde sonore, et/ou dans lequel le signal secondaire (2') est un signal sonore.

6. Procédé selon l'une des revendications précédentes, dans lequel la caractéristique est un temps de parcours, une vitesse de propagation, une conversion de mode, une atténuation, un déphasage par rapport au signal d'excitation (1) ou une grandeur dérivée d'une ou plusieurs de ces grandeurs.

7. Procédé selon l'une des revendications précédentes, dans lequel le procédé est un procédé pour l'examen non destructif de l'échantillon d'essai (50), dans lequel l'échantillon d'essai est une pièce, dans lequel le procédé est un procédé d'essai non destructif, dans lequel le procédé est un procédé d'essai acoustique, et/ou dans lequel le procédé est un procédé d'essai sonore, en particulier un procédé d'essai ultrasonore.

8. Procédé selon l'une des revendications précédentes, dans lequel la déformation mécanique se propageant (2) est une onde élastique, dans lequel la déformation mécanique se propageant (2) est une onde sonore, dans lequel la déformation mécanique se propageant (2) présente une fréquence d'au moins 16 kHz, dans lequel la déformation mécanique se propageant (2) présente une fréquence dans la plage des kHz, et/ou dans lequel la déformation mécanique se propageant (2) présente une fréquence dans la plage des MHz.

9. Procédé selon l'une des revendications 2 à 8, dans lequel le signal d'excitation (1) interagit avec une surface de l'échantillon d'essai (50), dans lequel le signal d'excitation (1) présente une fréquence dans la plage des kHz, et/ou dans lequel le signal d'excitation (1) présente une fréquence dans la plage des MHz.

10. Dispositif (100-102) pour examiner un échantillon d'essai (50), comprenant:
- un oscillateur fluidique (10) pour produire un signal d'excitation (1) pour l'échantillon d'essai (50), dans lequel l'oscillateur fluidique (10) est conçu pour produire le signal d'excitation (1) de telle sorte que le signal d'excitation (1) est transporté par un jet libre provenant de l'oscillateur fluidique (10) et présente une fréquence d'au moins 16 kHz;
- un détecteur (20) pour détecter une excitation (2) de l'échantillon d'essai (50) qui peut être produite par le signal d'excitation (1); et
- une unité d'évaluation (30) qui peut être couplée au détecteur (20) et est conçue pour obtenir des données produites par le détecteur lors de la détection de l'excitation (2).

11. Dispositif selon la revendication 10, dans lequel le dispositif est un dispositif d'essai sonore et/ou un dispositif d'essai ultrasonore, dans lequel l'unité d'évaluation (30) est une unité de commande et d'évaluation (30) qui est conçue pour déclencher la production du signal d'excitation (1), et/ou dans lequel l'unité de commande et d'évaluation (30) est conçue pour déterminer une caractéristique de l'excitation (2) à l'aide des données et/ou pour mettre en œuvre un procédé selon l'une des revendications 1 à 7.

12. Dispositif selon la revendication 10 ou 11, dans lequel l'oscillateur fluidique (10) est conçu pour produire le signal d'excitation (1) de telle sorte que le signal d'excitation (1) présente une fréquence dans la plage des kHz, que le signal d'excitation (1) présente une fréquence dans la plage des MHz, que le signal d'excitation (1) présente plusieurs impulsions avec un espacement d'impulsions (T) prédéterminé et/ou réglable, et/ou que le signal d'excitation (1) soit un signal sonore.

13. Dispositif selon l'une des revendications 10 à 12, dans lequel le dispositif (100-102) est un dispositif d'essai pour l'examen non destructif de l'échantillon d'essai (50), et/ou dans lequel l'échantillon d'essai est une pièce.

14. Utilisation d'un oscillateur fluidique (10) pour exciter une déformation mécanique (2), notamment une onde sonore, se propageant dans un échantillon d'essai (50) au moyen d'un jet libre oscillant produit dans l'oscillateur fluidique (10) présentant une fréquence d'au moins 16 kHz pendant un examen de l'échantillon d'essai (50).
